# EUROPÄISCHE PATENTANMELDUNG

(11) **EP 0 808 802 A1**
(43) Veröffentlichungstag der Anmeldung: **26.11.1997**
(21) Anmeldenummer: 97108009.8
(22) Anmeldetag: 16.05.1997
(51) Int. Cl.: C02F 1/00

(54) **Formkörper mit kristallartig angeordneten Begrenzungsflächen und Verwendung des Formkörpers**

(30) Priorität: 23.05.1996 CH 1303/96
(71) Anmelder: Huber, Josef A., 5200 Windisch (CH)
(72) Erfinder: Huber, Josef A., 5200 Windisch (CH)
(74) Vertreter: Hotz, Klaus, Dipl.-El.-Ing./ETH

(57) **Zusammenfassung**

Der Formkörper (**11**) ist aus einer Vielzahl von im, allgemeinen gleichen sowie im allgemeinen geraden Doppelpyramiden (**10**) aufgebaut, deren sich berührende Grundflächen (**14**) reguläre m-Ecke sind. Die Doppelpyramiden (**10**) sind so angeordnet, dass sich ihre einen Pyramidenspitzen im Mittelpunkt eines fiktiven, einen platonischen Körper bildenden regulären n-Flachs, vorzugsweise eines Würfels, befinden, während ihre anderen Pyramidenspitzen (**12b**) nach aussen ragen. Die jeweils benachbarten nach innen gewandten Pyramiden (10a) der Doppelpyramiden (**10**) berühren sich flächig längs seitlicher, dreieckiger Pyramidenflächen. Die Seitenflächen (12b) der nach aussen gewandten Pyramiden (**10b**) bilden die eigentlichen Begrenzungsflächen des Formkörpers (**11**). Ist das fiktive n-Flach ein Würfel, so sind vorzugsweise vierzehn Doppelpyramiden vorgesehen, wobei die Achsen von sechs Doppelpyramiden die Flächen des fiktiven Würfels senkrecht durchstossen, während die Achsen der restlichen acht Doppelpyramiden durch die Ecken des fiktiven Würfels verlaufen. Der Formkörper (**11**) wird verwendet zur Veränderung von Energiefeldern, insbesondere in Fluiden, die ihn unmittelbar oder mittelbar umgeben.

## Beschreibung

Die Erfindung betrifft einen Formkörper mit kristallartig angeordneten Begrenzungsflächen nach dem Oberbegriff des Patentanspruchs 1 sowie eine Verwendung dieses Formkörpers zur Veränderung von Energiefeldern in der Umgebung des Körpers, insbesondere in Fluiden.

Die immer weiter um sich greifende Pollution der Umwelt hat zur Folge, dass u.a. Luft und Wasser generell einer starken Verschmutzung unterliegen. Hier sei angemerkt, dass unter Wasser im Rahmen der vorliegenden Erfindung nicht nur chemisch reines Wasser sondern Wasser aus Gewässern sowie Leitungswasser verstanden werden soll. Die Körper der meisten höheren Lebewesen bestehen zu einem bedeutenden Teil aus Wasser und ihr Organismus funktioniert so, dass er einerseits stets neues einwandfreies Wasser benötigt, anderseits aber stets verschmutztes Wasser abgibt. Weitere Verschmutzung des Wassers kommt dadurch zustande, dass es in irgendeiner Form bei der Durchführung industrieller Prozesse benützt wird. Seit langem sind daher Abwassetreinigungsanlagen bekannt, in denen Schmutzwasser aufbereitet wird. Mit den bekannten grosstechnischen Verfahren ist es aber ni 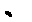 ht möglich, das Wasser so zu behandeln, dass es wieder völlig einwandfrei wird. Daher wird versucht, das Wasser zusätzlich kurz vor seinem Verbrauch oder ggfs - z.B. bei Badewasser - während des Gebrauchs weiterhin zu verbessern, wozu zahlreiche Verfahren im Gebrauch sind.

Häufig wird Wasser ozoniert; was aber nicht unbedenklich und sehr energieverschleissend ist. Es ist auch bekannt, das Wasser durch verschiedene Materialien und Magnetfelder zu bewegen und dadurch in ähnlicher Weise zu beeinflussen, wie dies auch in der Natur geschieht. Auch eine Verwirbelung des Wasser wird zu dessen Verbesserung verwendet, wobei ggfs. der Sauerstoffgehalt des Wassers erhöht wird. Gelegentlich werden dem zu verbessernden Wasser Körper verschiedener Formen beigegeben, die die Wasserqualität auf mannigfaltige Weise verbessern.. Beispielsweise versucht man auf diese Weise, dem Wasser Chemikalien beizugeben, die durch den sich dabei langsam auflösenden Körper geliefert werden, oder man versucht im Sinne einer Permanentfiltration in leicht bewegtem Wasser eine physikalische Wasserverbesserung zu erreichen, wobei der Körper als Filter oder Ablagerungskern für Verschmutzungen dient. Der Nachteil solcher Methoden ist darin zu sehen, dass sich erstens die bisher bekannten dabei verwendeten Körper verbrauchen und dass zweitens auf diese Weise durch die Körper letztlich wieder die Wasserqualität negativ beeinflusst wird.

Die Aufgabe der Erfindung wird somit darin gesehen, einen Formkörper der eingangs genannten Art sowie dessen Verwendung zur Veränderung von Energiefeldern, insbesondere zur Verbesserung von Fluiden, wie vorzugsweise von Wasser, die den Formkörper unmittelbar oder mittelbar umgeben, vorzuschlagen; dabei sollte der Formkörper die erwünschten Eigenschaften aufgrund seiner besonderen Form entfalten, ohne sich während seiner Verwendung, z.B. wenn er in zu verbesserndes Wasser getaucht sind, abzunützen.

Diese Aufgaben werden erfindungsgemäss bezüglich des Formkörper durch die Merkmale des kennzeichnenden Teils des Patentanspruchs 1 sowie bezüglich der Verwendung durch die Merkmale des kennzeichnenden Teils des Patentanspruchs 13 gelöst.

Vorteilhafte Ausführungsbeispiele und Weiterbildungen des erfindungsgemässen Formkörpers sowie der erfindungsgemässen Verwendung werden durch die abhängigen Patentansprüche 2 - 12 bzw. 14 definiert.

Der neue Formkörper weist eine kristallähnliche bzw. dreidimensionl-sternartige Form auf und besteht aus einer Vielzahl von Doppelpyramiden. Jede Doppelpyramide wiederum besteht aus zwei Pyramiden mit gleichen, aneinander anliegenden bzw. zusammenfallenden Grundflächen. Die Grundflächen werden durch reguläre Polygone mit m Ecken gebildet, wobei ausdrücklich als Sonderfall n auch unendlich sein kann, was für diesen Sonder- bzw. Grenzfall zur Folge hat, dass die Pyramiden zu Kegeln werden.

Um sich die Anordnung der Doppelpyramiden zu veranschaulichen, stellt man sich am besten ein fiktives reguläres n-Flach bzw. einen platonischen Körper vor. Von dessen Mitte bzw. dessen geometrischem Schwerpunkt gehen die Achsen aller Doppelpyramiden aus, und in dessen Mitte treffen sich alle Doppelpyramiden mit jeweils einer ihrer Pyramidenspitzen. Die Achsen dieser nach innen gewandten Pyramiden stehen senkrecht auf den zugehörigen die Grundflächen bildenden Polygonen. Die nach innen gewandten Pyramiden sind so ausgebildet und angeordnet, dass sich jeweils benachbarte Pyramiden längs mindestens einer von der Mitte des fiktiven n-Flachs ausgehenden Geraden berühren. Faktisch sind diese Pyramiden sind so dimensioniert, dass sich bei Polygonen mit unendlich vielen Ecken, also bei Kreisen, die jeweils benachbarten zu Kegeln degenerierten Pyramiden längs einer Erzeugenden berühren, während sich bei Polygonen mit einer endlichen Zahl von Ecken die benachbarten Pyramiden längs einer gleichschenkligen dreieckigen Seitenfläche berühren.

Bei einer ersten Ausführungsart des erfindungsgemässen Formkörpers ist das fiktive n-Flach ein Tetraeder. Dessen Flächen sind gleichseitige Dreiecke. Die insgesamt acht Doppelpyramiden sind räumlich so angeordnet, dass die Achsen von vier nach innen gewandten Pyramiden die Flächen des Tetraeders in deren Mitten durchstossen, während die Achsen der restlichen vier nach innen gewandten Pyramiden durch die Ecken des Tetraeders verlaufen.

Bei einer zweiten Ausbildungsart des erfindungsgemässen Formkörpers ist das fiktive n-Flach ein reguläres Hexaeder, also ein Würfel. Dessen Flächen sind Quadrate. Die Doppelpyramiden sind räumlich so angeordnet, dass die Achsen von sechs nach innen gewandten Pyramiden die sechs Flächen des fiktiven Hexaeders in deren Mitten durchstossen, und dass die Achsen der restlichen acht nach innen gewandten Pyramiden durch die acht Ecken des Hexaeders verlaufen. Denselben Formkörper erhält man, wenn das fiktive n-Flach ein Oktaeder ist, wobei acht Achsen die Flächen des Oktaeders mittig durchstossen und sechs Aschsen durch dessen Ecken verlaufen.

Beim einer dritten Ausführungsart des erfindungsdgemässen Formkörpers wird das fiktive n-Flach durch ein Dodekaeder gebildet. Von den Achsen der insgesamt zweiunddreissig nach innen gewandten Pyramiden durchstossen zwölf Achsen die Flächen des Dodekaeders mittig und zwanzig Achsen gehen durch die Ecken des Dodekaeders. Denselben Formkörper erhält man, wenn das fiktive n-Flach ein Ikosaeder ist, wobei dann zwanzig der Achsen die Flächen des Ikosaeders mittig durchstossen und zwanzig der Achsen durch die Ecken des Ikosaeders gehen.

Es wurde schon erwähnt, dass die Achsen der nach innen gewandten Pyramiden senkrecht auf den zugehörigen Grundflächen stehen. Vorzugsweise stehen auch die Achsen der nach aussen gewandten Pyramiden senkrecht auf den zugehörigen Grundflächen, so dass die beiden Pyramiden einer Doppelpyramide eine gemeinsame Achse besitzt.

In den meisten Fällen bestehen die Doppelpyramiden aus zwei gleichen Pyramiden.

Da die Wirkung der erfindungsgemässen Formkörper auf deren spezieller Formgebung beruht, kann jeder der Formkörper ein eigentlicher, gewissermassen 'positiver' Körper sein, oder aber ein gewissermassen 'negativer Körper', also ein Hohlraum bzw. dessen Begrenzung. In einem solchen Hohlraum kann beispielsweise ein zu verbesserndes Fluid aufgenommen sein. Mit anderen Worten, es können die Begrenzungsflächen entweder äussere Begrenzungsflächen eines Körpers oder aber die einen Hohlraum einschliessenden inneren Begrenzungsflächen eines Behältnisses sein.

Soll im letzteren Fall der Formkörper zur Verbesserung von Wasser verwendet werden, das zeitweilig in ihm aufgenommen ist, so muss in den Begrenzungsflächen mindestens ein mikroskopischer oder makroskopischer Fluiddurchlass vorgesehen sein, durch welchen das Wasser in den Hohlraum und aus dem Hohlraum strömen kann.

Bei besonders bevorzugten Formkörpern der ersten Ausführungsform, bei welchen das fiktive n-Flach ein Tetraeder ist, basieren die Pyramiden auf regulären Dreiecken, bei besonders bevorzugten Formkörpern der zweiten Ausführungsform, bei welchen das fiktive n-Flach ein Hexaeder oder ein Oktaeder ist, auf auf regulären Zwölfecken und bei besonders bevorzugten Formkörpern der dritten Ausführungsart, bei welchen das fiktive n-Flach ein Dodekaeder oder Ikosaeder ist, auf regulären Fünfzehnecken.

Jeder der erfindungsgemässen Formkörper kann aus einzeln hergestellten und erst anschliessend aneinander befestigten Begrenzungsflächen oder Pyramiden oder Doppelpyramiden gebildet sein. Nach einem anderen Herstellungsverfahren kann der erfindungsgemässe Formkörper auch integral hergestellt sein, wobei sowohl spanabhebende Formgebungsverfahren wie auch spanlose Formgebungsverfahren, z.B. Giessen oder Sintern, in Frage kommen.

Es wurde erwähnt, dass die erfindungsgemässen Formkörper kristallartig angeordnete Begrenzungsflächen besitzen. Darunter soll verstanden werden, dass die Begrenzungsflächen bezüglich ihrer geometrischen Konfiguration durch definierte einfache ebene geometrische Flächen gebildet sind, und dass sie in reguärerer oder semiregulär Konfiguration angeordnet sind, so dass die Formkörper sich geometrisch - nicht unbedingt herstellungsmässig - aus einfachen geometrischen Grundkörpern zusammensetzen; es wird aber ausdrücklich darauf hingewiesen wird, dass die Formkörper nicht notwendigerweise aus einem Einkristall oder aus einem kristallinen Gefüge bestehen müssen. Die Formkörper können nach der Erfindung nämlich aus verschiedensten anorganischen Materialien hergestellt sein, wobei natürlich kristalline Stoffen wie beispielsweise Edel- oder Halbedelsteine nicht ausgeschlossen sind, sodann können die Formkörper auch aus anderen silikathaltigen oder metallischen Stoffen, aber auch aus gänzlich anderen, zum Beispiel organischen Materialien, insbesondere auch aus Kunststoff, hergestellt sein.

Zwar beruht die Wirkung der Formkörper, wie schon erwähnt, prinzipiell auf der besonderen Formgebung; jedoch hat das Material, aus dem die Formkörper hergestellt ist, einen gewissen Einfluss auf das Ausmass der Wirkung. Das Material wirkt sich somit gewissermassen als Parameter aus.

In entsprechender Weise beeinflusst auch die Grösse der erfindungsgemässen Formkörpers deren Wirksamkeit, so dass die Grösse sich als weiterer Parameter auswirkt.

Die erfindungsgemässen Formkörper können ihre umweltfreundliche Wirkung auch entfalten, wenn sie sich als positive Körper in einem geschlossenen Behälter, zum Beispiel aus ausgewählten Metallen oder Metallkombinationen, befinden oder wenn sie einen geschlossenen Hohlraum bildet.

Im folgenden wird die Erfindung anhand eines bevorzugten Ausführungsbeispiels und mit Bezug auf die Zeichnung ausführlich beschrieben. Es zeigt:
- **Fig. 1**: eine Doppelpyramide zur Bildung eines positiven Formkörpers nach der Erfindung mit vertikaler Achse, von der Seite gesehen;
- **Fig. 2**: die in **Fig. 1** dargestellte Doppelpyramide, von oben gesehen;
- **Fig. 3**: einen für den erfindungsgemässen Formkörper fiktives reguläres Hexaeder mit den Achsen der Doppelpyramiden;
- **Fig. 4**: einen erfindungsgemässen Formkörper, in einer Ansicht;
- **Fig. 5 - Fig. 7**: den in **Fig. 4** dargestellten Formkörper in anderen Ansichten.

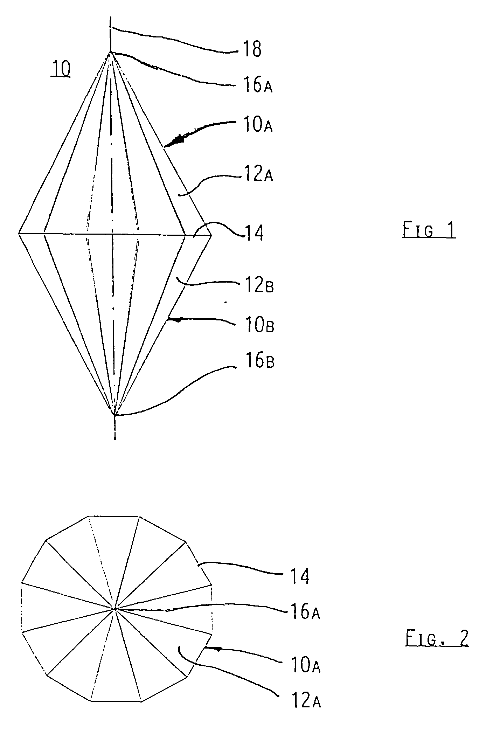

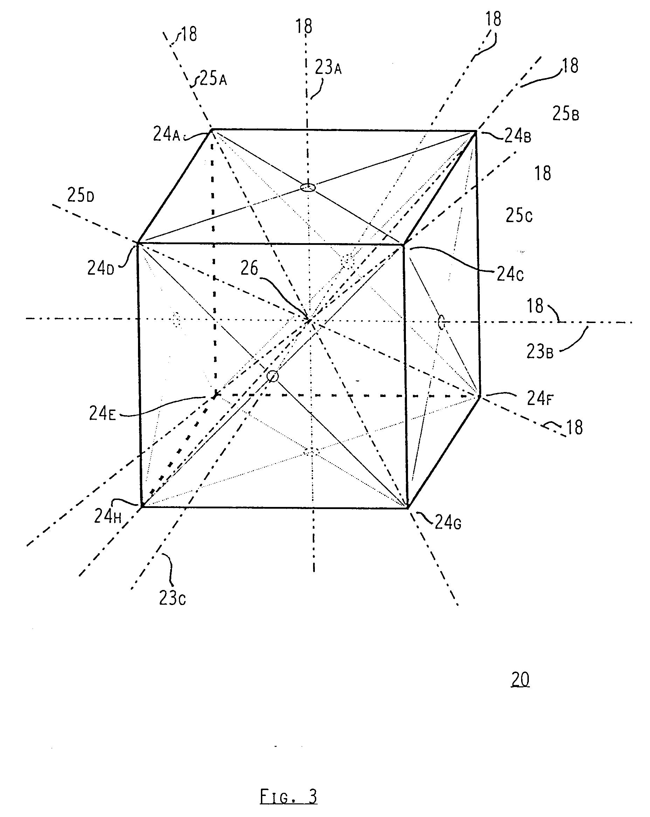

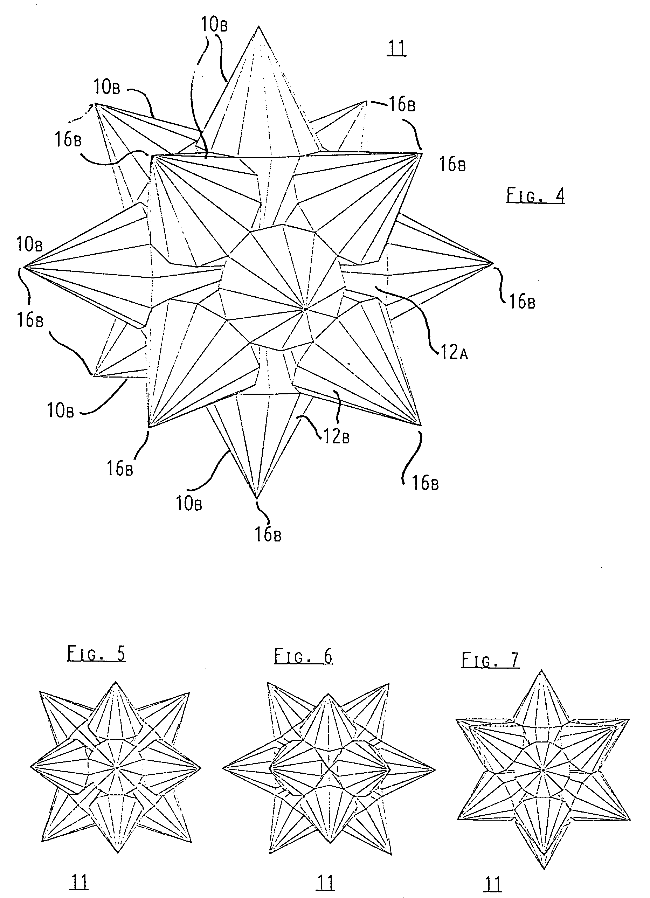

In den **Fig. 1 - 2** ist eine Doppelpyramide **10** dargestellt, die gewissermassen als Grundbaustein eines Formkörpers **11** nach der Erfindung dient, wie er in den **Fig. 4 - 7** abgebildet ist.. Die Doppelpyramide **10** setzt sich aus zwei gleichen Pyramiden **10a, 10b** zusammen. Deren dreieckige Seitenflächen **12a, 12b** erstrecken sich von der gemeinsamen Grundfläche **14** aus in entgegengesetzte Richtungen bis zu den Pyramidenspitzen **16a, 16b**. Die gemeinsame Achse **18** der Pyramiden **10a, 10b**, die natürlich gleichzeitig die Achse der Doppelpyramide **10** ist, ist senkrecht zur Grundfläche **14** angeordnet. Die Pyramiden **10a, 10b** sind somit gerade Pyramiden.

**Fig. 2** zeigt ein reguläres Hexaeder, d.h. einen Würfel **20**, der für einen Formkörper **11** gemäss den **Fig. 4 - 7** ein fiktives 6-Flach ist und zur leichteren Verständlichkeit des Aufbaus des Formkörpers dient. Man erkennt die sechs, nicht mit Bezugszeichen versehenen, Flächen des Würfels **20** sowie seine acht Ecken **24a - 24h** und seinen Mittelpunkt **26**. Im weiteren sind in **Fig. 3** drei senkrecht zu jeweils gegenüberliegenden Flächen gerichtete Symmetrieachsen **23a, 23b, 23c** eingezeichnet, welche sich im Mittelpunkt bzw. in geometrischen Schwerpunkt **26** schneiden, sowie die vier jeweils gegenüberliegende Ecken verbindenden räumlichen Diagonalen **25a, 25b, 25c, 25d,** welche sich ebenfalls im Mittelpunkt **26** schneiden. Die Symmetrieachsen **23a, 23b, 23c** und die Diagonalen **25a, 25b, 25c, 25d** bilden die Achsen **18** der in **Fig. 4** nicht eingezeichneten Doppelpyramiden.

Der Formkörper **11** ist so aufgebaut, dass er vierzehn Doppelpyramiden **10** enthält. Die Doppelpyramiden **10** sind so angeordnet, dass ihre einen Pyramidenspitzen **16a** im Mittelpunkt **26** des fiktiven Würfels **20** liegen. Die Achsen **18** von sechs Doppelpyramiden **10** fallen mit den drei Symmetrieachsen **23a, 23b, 23c** des fiktiven Würfels **20** zusammen, und die Achsen **18** der acht restlichen Doppelpyramiden **10** fallen mit den vier räumlichen Diagonalen **25a, 25b, 25c, 25d** des fiktiven Würfels **20** zusammen. Die anderen Pyramidenspitzen **16b** der Doppelpyramiden **10** liegen auf einer nicht dargestellten Kugel, welche für den Formkörper **11** eine umhüllende Fläche darstellt.

Der fertige Formkörper ist in verschiedenen Ansichten in den **Fig. 4 - 7** dargestellt. Der Oeffnungswinkel bzw. der Winkel α zwischen der Grundfläche **14** und den Seitenflächen **12a, 12b** der Pyramiden **10a, 10b** bestimmt sich dadurch, dass jeweils Seitenflächen **12a** benachbart angeordneter Pyramiden **10a** sich flächig berühren, das heisst zusammenfallen.

Es sei noch angemerkt, dass die Oeffnungswinkel der jeweils nach aussen ragenden Pyramiden **10b** einen anderen Wert haben können als die Oeffnungswinkel der nach Innen ragenden Pyramiden **10a**; ausserdem müssen die Oeffnungswinkel der nach aussen ragenden Pyramiden **10b** nicht zwingend unter sich gleich sein. Schliesslich wäre es auch möglich, dass die Achsen der Pyramiden **10a, 10b** einer Doppelpyramide nicht zusammenfallen, sondern dass die Achsen der nach aussen ragenden Pyramiden **10b** nicht senkrecht sondern schief auf den Grundflächen **14** stehen.

Die vorgängige Beschreibung betrifft einen Formkörper der zweiten Ausführungsart. In analoger Weise sind die nicht dargestellten Formkörper der ersten und der dritten Ausführungsart aufgebaut.

Der Formkörper wird verwendet zur Veränderung von Energiefeldern in Fluiden, die sich mittelbar oder unmittelbar in seiner Umgebung befinden, womit man eine Verbesserung der Fluide bezweckt. Dabei kann es sich um Enegiefelder verschiedenster Art handeln. Als Fluide sollen im Rahmen der vorliegenden Erfindung fliessfähige Stoffe wie Gase oder Flüssigkeiten, insbesondere Wasser, aber auch Nebel und Suspensionen verstanden werden. Je nach der Ausbildung des erfindungsgemässen Formkörpers umgeben die Fluide einen in sie eingetauchten Formkörper, oder sie befinden sich in einem behälterartigen Formkörper.

## Patentansprüche

1. Formkörper (**11**) mit kristallartig angeordneten Begrenzungsflächen (**12b**),
**dadurch gekennzeichnet,**
dass er durch eine Vielzahl von Doppelpyramiden (**10**) gebildet ist, von welchen jede aus zwei Pyramiden (**10a, 10b**) besteht, die sich mit ihren ein reguläres m-Eck bildenden Grundflächen (**14**) berühren, wobei von jeder Doppelpyramide (**10**) die eine Pyramide (**10a**) mit ihrer Pyramidenspitze (**16a**) im Schwerpunkt (**26**) eines fiktiven, einen platonischen Körper bildenden n-Flachs (**20**) liegt und die jeweils benachbarten Pyramiden (**10a**) mindestens längs einer Geraden (**12a**) berührt, und wobei die Pyramiden (**10a**) so ausgebildet und angeordnet sind, dass der Schwerpunkt jeder Fläche des n-Flachs (**20**) von den Achsen (**18**) eines ersten Teils der Pyramiden (**10a**) durchstossen wird, während die Ecken des n-Flachs auf den Achsen (**18**) der restlichen Pyramiden (**10a**) liegen.

2. Formkörper nach Patentanspruch **1**,
**dadurch gekennzeichnet,**
dass der platonische Körper ein Tetraeder ist, wobei der Formkörper durch acht Doppelpyramiden gebildet ist.

3. Formkörper (**11**) nach Patentanspruch **1**,
**dadurch gekennzeichnet,**
dass der platonische Körper ein Hexaeder oder ein Oktaeder ist, wobei der Formkörper (**11**) durch vierzehn Doppelpyramiden (**10**) gebildet ist. (**Fig. 4 - 7**).

4. Formkörper nach Patentanspruch **1**,
**dadurch gekennzeichnet,**
dass der platonische Körper ein Dodekaeder oder ein Ikosaeder ist, wobei der Formkörper durch zweiunddreissig Doppelpyramiden gebildet ist.

5. Formkörper (**11**) nach Patentanspruch **1**,
**dadurch gekennzeichnet,**
dass die Achsen (**18**) der dem Aeusseren des platonischen Körpers (**20**) zugewandten Pyramiden (**10b**) mit den Achsen (**18**) der dem Inneren des platonischen Körpers (**20**) zugewandten Pyramiden (**10a)** zusammenfallen.

6. Formkörper (**11**) nach Patentanspruch **1**,
**dadurch gekennzeichnet,**
dass die Begrenzungsflächen (**12b**) äussere Begrenzungsflächen eines Körpers sind. (**Fig. 4-7**).

7. Formkörper Patentanspruch **1**,
**dadurch gekennzeichnet,**
dass die Begrenzungsflächen innere Begrenzungsflächen eines einen Hohlraum einschliessenden Körpers sind.

8. Formkörper nach Patentanspruch **7**,
**dadurch gekennzeichnet,**
dass die Begrenzungsflächen mindestens einen mikroskopischen oder makroskopischen Fluiddurchlass besitzen.

9. Formkörper nach Patentanspruch **2**,
**dadurch gekennzeichnet,**
dass die die Grundflächen bildenden Polygone drei Ecken aufweisen, wobei sich benachbarte, vom Schwerpunkt des fiktiven Teraeders ausgehende Pyramiden längs Seitenflächen berühren.

10. Formkörper (**11**) nach Patentanspruch **3**,
**dadurch gekennzeichnet,**
dass die die Grundflächen (**14**) bildenden Polygone zwölf Ecken aufweisen, wobei sich benachbarte, vom Schwerpunkt (**26**) des fiktiven Hexaeders oder Oktaeders (**20**) ausgehende Pyramiden (**10a**) längs Seitenflächen (**12a**) berühren.

11. Formkörper nach Patentanspruch **4**,
**dadurch gekennzeichnet,**
dass die die Grundflächen bildenden Polygone fünfzehn Ecken aufweisen, wobei sich benachbarte, vom Schwerpunkt des fiktiven Dodekaeders oder Ikosaeders ausgehenden Pyramiden längs Seitenflächen berühren.

12. Formkörper nach Patentanspruch **1**,
**dadurch gekennzeichnet,**
dass er integral oder aus einzelnen, aneinander befestigten Teilen hergestellt ist.

13. Verwendung eines Formkörpers (**11**) nach Patentanspruch **1** zur Veränderung von Energiefeldern, inbesondere in Fluiden,
**dadurch gekennzeichnet,**
die Begrenzungsflächen (**12b**) mittelbar oder unmittelbar mit dem Fluid in Berührung sind.

14. Verwendung nach Patentanspruch **9**,
**dadurch gekennzeichnet,**
dass das Fluid Wasser ist.
